# EUROPEAN PATENT SPECIFICATION

(11) **EP 2 098 768 B1**
(45) Date of publication and mention of the grant of the patent: **06.06.2012**
(21) Application number: 09003145.1
(22) Date of filing: 05.03.2009
(51) Int. Cl.: F16L 3/12

(54) **Locking device for locking tube clamping collars**
Arretiervorrichtung zum Arretieren von Klemmringen
Dispositif de verrouillage pour verrouiller les colliers de serrage de tube

(30) Priority: 06.03.2008 IT MI20080375
(43) Date of publication of application: 09.09.2009
(73) Proprietor: GIA S.p.A., 28069 Trecate (Novara) (IT)
(72) Inventor: Invernizzi, Alma, 28069 Trecate (NO) (IT)
(74) Representative: Petraz, Gilberto Luigi

(56) References cited:
- DE-A1- 19 842 171
- DE-C- 810 088
- DE-U1- 29 519 000
- FR-A1- 2 631 678

## Description

### BACKGROUND OF THE INVENTION

The present invention relates to a locking device, which has been particularly designed for locking tube clamping collars or clamping bands. Examples of such locking devices can be found in FR 2631678 or DE 19842171.

As is known, outlet tubes or pipes usually used in buildings and the like are generally made of a plastics material and are supported by supporting collars or clamps which are fixed to the building walls by fixing brackets.

Said outlet tubes, on the other hand, are subjected to expanding or dilating movements due to the climatic conditions and different temperatures to the waste waters.

Accordingly, it is necessary to design tube or pipe supporting elements adapted to properly lock tubes or pipes while allowing said tubes or pipes to expand under thermal changes.

### SUMMARY OF THE INVENTION

Accordingly, the aim of the present invention is to provide such a locking device, specifically designed for locking tube collars or clamps, adapted to solve the above disclosed problems.

Within the scope of the above mentioned aim, a main object of the invention is to provide such a locking device allowing the supporting elements to which said device is affixed to be easily and quickly adjusted, so as to operate as an adjustable reversible spacer elements for flange, collar or clamp elements used as pipe or tube supporting elements.

Another object of the present invention is to provide such a locking device allowing the collar to be quickly and easily installed.

Yet another object of the present invention is to provide such a locking device which can be applied to several types of collars or clamps, both for fixing outlet tubes, and for other applications.

Yet another object of the present invention is to provide such a locking device which has reversible properties, that is is adapted to allow a quick and easy disassembling of the tube collar or clamp.

Yet another object of the present invention is to provide such a locking device, which, owing to specifically designed constructional features, is very reliable and safe in operation.

Yet another object of the present invention is to provide such a locking device which can be easily made starting from easily available elements and materials and which, moreover, is very competitive from a mere economic standpoint.

According to one aspect of the present invention, the above mentioned aim and objects, as well as yet other objects, which will become more apparent hereinafter, are achieved by a locking device for locking tube clamping collars or bands, characterized in that said locking device comprises a locking-screw element adapted to be applied to a first free end portion of a clamping collar or the like, at two different positions, one for an enlarged applying diameter and the other for a reduced applying diameter, said locking-screw element being adapted to swing on the first free end portion thereby it can be latched to the second free end portion of said collar, to lock said collar on a tube.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

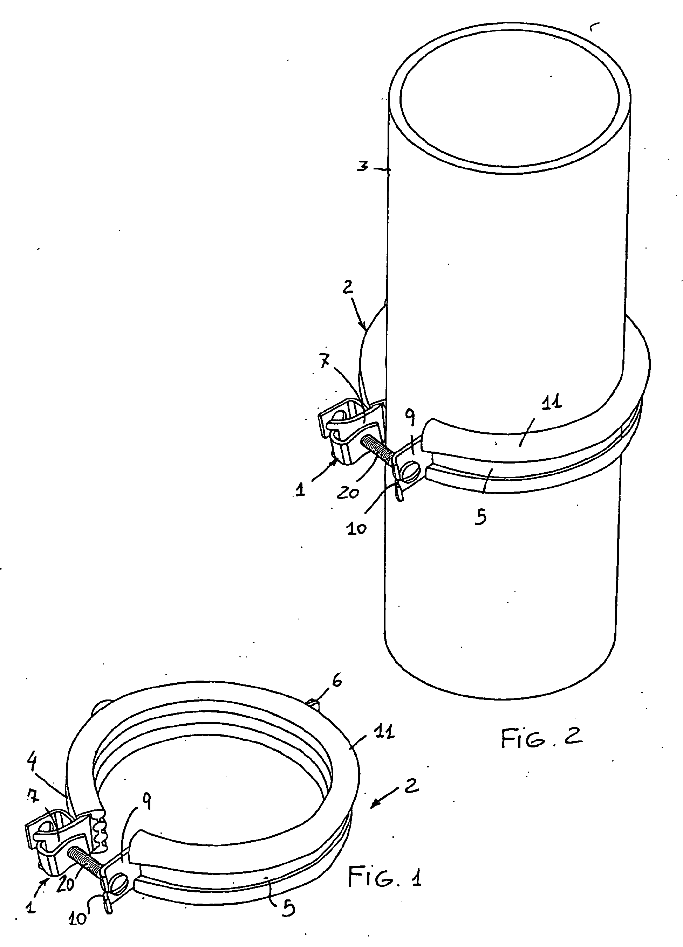

Figure 1 is a perspective view of a supporting collar including a locking device according to the present invention;
Figure 2 is a perspective view of a tube supported by the collar including the locking device according to the present invention;
Figure 3 is a top plan view showing a first operating step for applying the collar, with the locking device being shown in an enlarged diameter position, to a tube;
Figure 4 is a further top plan view showing the first operating step for applying the collar, the locking device being arranged at a reduced diameter position, to a tube;
Figure 5 is a further top plan view showing a closure operating step for closing the collar, with the locking device being shown at its enlarged diameter position;
Figure 6 is a further top plan view showing the collar closure operating step, the locking device being shown at its reduced diameter applying position;
Figure 7 is yet another top plan view showing a clamping operating step for clamping the locking device at its enlarged diameter position;
Figure 8 is yet another top plan view showing a clamping operating step for clamping the locking device at its reduced diameter position;
Figure 9 is yet another top plan view showing the collar in its use condition, with the locking device at the enlarged diameter position thereof;
Figure 10 is yet another top plan view showing the collar in its use condition, the locking device being shown in its reduced diameter position;
   and
Figure 11 is a cross-sectional view of the collar.

### DESCRIPTION OF THE PREFERRED EMBODIMENTS

With reference to the number references of the above mentioned figures, the locking device according to the present invention, which has been generally indicated by the reference number 1, is designed for application to a supporting element 2, such as a supporting collar, to be used for clamping a tube, generally indicated by the reference number 3.

More specifically, the collar 2 is herein constituted by two semicircular collar portions, that is a first collar portion 4 and a second collar portion 5.

Both said collar portions 4 and 5 have an end part thereof adapted to engage with the end portion of the other respective part to form a hinge 6.

As shown, the first portion 4 of the collar comprises a contoured or shaped end 7, including a throughgoing hole 8.

The contoured or shaped end 7 of the half-collar 4 has a curved contour and includes a middle slots designed for receiving the locking device 1 in its two use positions, while preventing said locking device 1 from turning.

The second portion 5 of the collar comprises, in turn, a contoured end portion 9 including a radially extending slot 10 which is opened at the outer edge of said contoured or shaped end 9.

The collar 2 comprises moreover a rubber sheath 11, arranged, in a use condition, between the outer surface of the tube 3 and the inner surface of the collar.

According to the invention, the locking device 1 is constituted by a metal plate element, having a S-shape.

In particular, said metal plate is so constructed as to define a first plate length 12, including a throughgoing hole 15, a second plate length 13 including a threaded hole 16 and a third plate length 14 including a respective threaded hole 17.

The first plate length 12 is coupled to the second plate length 13 by a broad fitting loop portion 18.

The second plate length 13 is coupled to the third plate length 14 by a reduced width fitting loop portion 19.

Thus, the threaded portions or lengths 13 and 14 will be arranged in a close relationship with one another, whereas the first plate length 12, including the above mentioned throughgoing hole, is spaced from the seconde plate threaded length 13.

The device 1 is applied to the contoured end portions 7 and 9 of the collar by a locking screw 20, which, as clamped or screwed-on, will allow the collar to be firmly fixed to the tube or pipe.

According to the present invention, the locking device 1 can be applied to the collar at two use positions, that is an enlarged diameter position and a reduced diameter position.

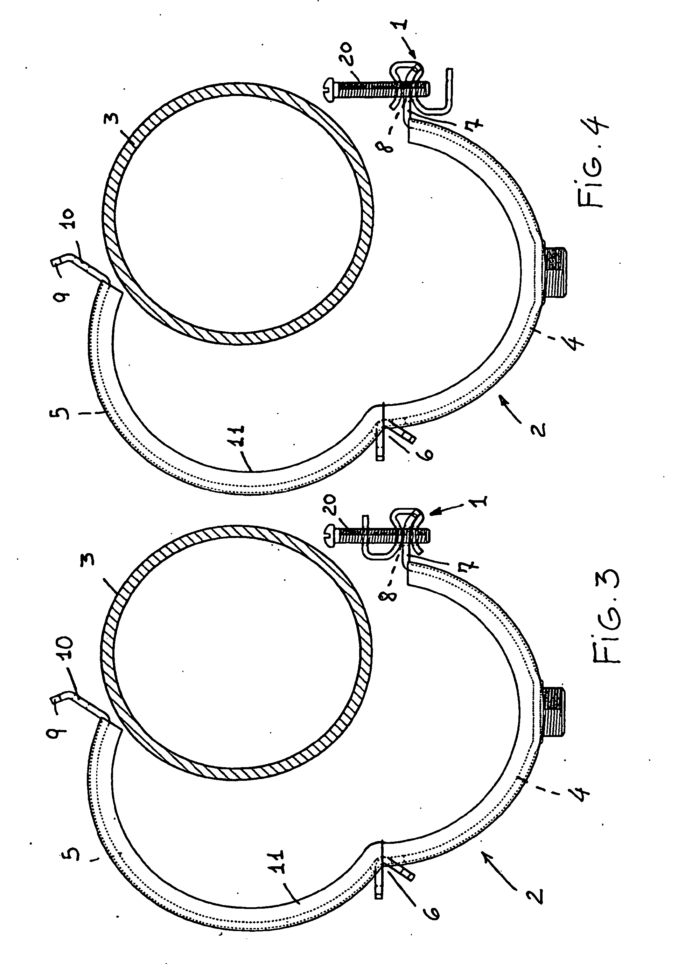

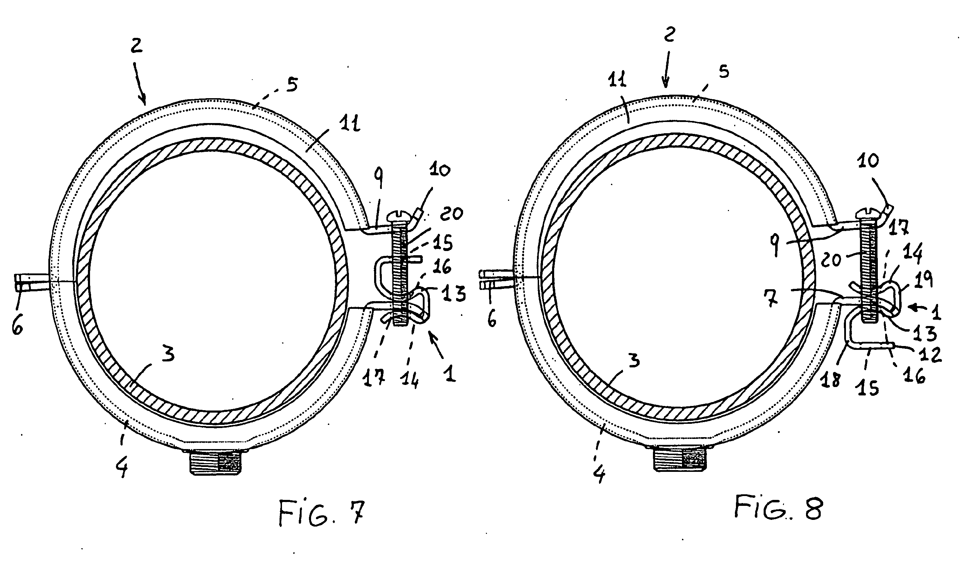

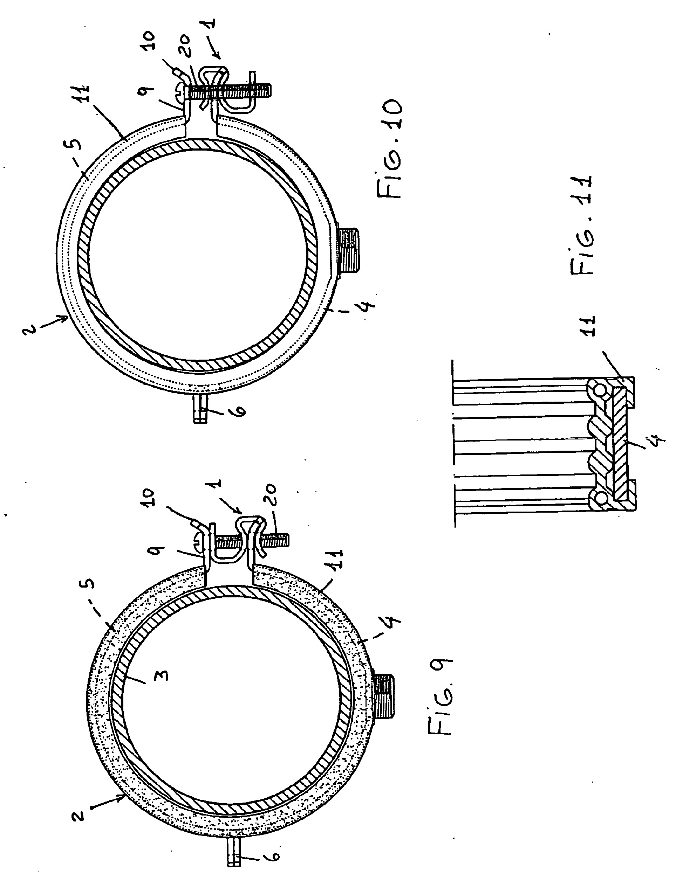

The application of the enlarged diameter device is shown in figures 3, 5, 7 and 9 in sequence, whereas the application of the reduced diameter device is shown in figures 4, 6, 8 and 10, in sequence.

Thus, if the diameter of the tube is a small diameter, then the locking device will be applied by encompassing by its two threaded lengths 13 and 14 the contoured end portion 7 of the collar, thereby leaving on outside the first length 12 with its throughgoing hole, as is shown in figures 4, 6, 8 and 10.

On the other hand, if the diameter of the tube is a comparatively large diameter, then the locking device will be applied by encompassing with its two threaded lengths 13 and 14 the contoured end portion 7 of the collar so as to leave the first length 12 and respective throughgoing hole downward directed, that is between the two contoured end portions 7 and 9 of the collar, as is shown in figures 3, 5, 7 and 9.

Then, by having applied the locking device to the end portion 7 of the collar, it will be possible to screw-on the locking screw 20 to the threaded holes 16 and 17 of the threaded lengths 13 and 14.

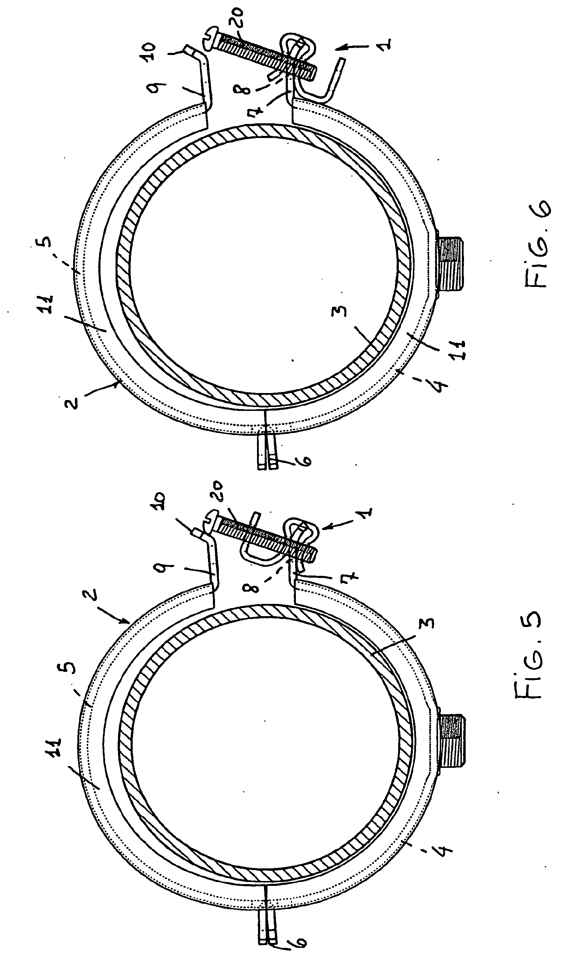

The width of the throughgoing hole 8 of the contoured end portion 7 will allow the locking device - locking screw assembly to awing, as shown in figures 5 and 6.

Thus, it is possible, upon having closed the collar portions 4 and 5, to rotatively drive the locking device 1 - locking screw 20 assembly to cause the stem part of the screw 2D to be engaged in the slot 10 of the contoured end portion 9.

In this connection it should be pointed out that the slot 10 is so designed as to allow the stem of the screw 20 to pass therethrough, but having a width narrower than that of the head of the screw, thereby, by clamping or screwing on the screw, it will be possible to correspondingly clamp the portions 4 and 5 on the pipe or tube 3, as it is schematically shown in figures 3 to 10 in sequence.

It has been found that the invention fully achieves the intended aim and objects.

In fact, the invention has provided a locking device which allows the diameter of the collar or like a clamping element to be easily adjusted, with the device mounted either in a direction or in the other direction on an end portion of one of the two collar parts, while clamping the assembly by the locking screw.

In practicing the invention, the used materials, as well as the contingent size and shapes, can be any, depending on requirements.

## Claims

1. Locking device (1) for locking tube clamping collars or bands (2), comprising a locking-screw element (20) able to be applied to a first free end portion (7) of a clamping collar (2) or the like, at two different positions, one for an enlarged applying diameter and the other for a reduced applying diameter, said locking-screw element (20) being able to swing on the first free end portion (7) thereby it can be latched to the second free end portion (9) of said collar, to lock said collar (2) on a tube (3), **characterized in that** said locking device comprises a S-shape plate (1) having a first plate length (12) with a through-going hole (15), a second plate length (13) with a threaded hole (16), and a third plate length (14) with a threaded hole (17), the first plate length (12) being coupled to the second plate length (13) by a larger broad fitting loop portion (18), the second plate length (13) being coupled to the third plate length (14) by a smaller reduced width fitting loop portion (19), the S-shape plate (1) having a first locking position for enlarged diameters with the first plate length (12) located between the first (7) and second (9) end portions of the collar (2), and a second locking position for reduced diameters, upturned with respect to the first position, with the first plate length (12) located outside said first and second portions (7, 9).

2. Locking device as in claim 1, **characterized in that** said collar (2) is constituted by two semicircular collar portions, a first (4) and a second (5), the first (4) collar portion comprising said first end portion (7), the first end portion (7) including a through-going hole (8), the second (5) collar portion comprising said second end portion (9), the second end portion (9) including a radially extending slot (10) opened at the outer edge.

3. Locking device as in claim 2, **characterized in that** said collar portions (4, 5) have an end part thereof adapted to engage with the end portion of the other respective part to form a hinge (6).

4. Locking device as claim 2, **characterized in that** said slot (10) of the second end portion (9) of the collar has a width designed to allow a stem of the locking-screw element (20) to pass therethrough but narrower than that of a head of said locking-screw element (20).

5. Locking device as in any preceding claims, **characterized in that** said collar (2) comprises a rubber sheath (11) arranged, in use, between an outer surface of the tube (3) and the inner surface of the collar (2).

## Patentansprüche

1. Schließvorrichtung (1) zum Verschließen von Rohrklemmringen oder -bändern (2), umfassend ein Verschluss-Schraubelement (20), welches geeignet ist, an einem ersten freien Endabschnitt (7) des Klemmrings (2) oder dergleichen angewendet zu werden, in zwei unterschiedlichen Positionen, eine für einen erweiterten Anwendungsdurchmesser und eine für einen reduzierten Anwendungsdurchmesser, wobei das Verschluss-Schraubelement (20) geeignet ist, an dem ersten freien Endabschnitt (7) zu schwingen, wodurch es mit dem zweiten freien Endabschnitt (9) des Rings verriegelt werden kann, um den Ring (2) an einem Rohr (3) zu schließen,
**dadurch gekennzeichnet, dass** die Schließvorrichtung eine S-Förmige Platte (1) umfasst, die eine erste Plattenlänge (12) mit einem Durchgangsloch (15), eine zweite Plattenlänge (13) mit einem Gewindeloch (16) und eine dritte Plattenlange (14) mit einem Gewindeloch (17) aufweist, wobei die erste Plattenlänge (12) mit der zweiten Plattenlänge (13) durch einen größeren weiten Beschlag-Schleifen-Abschnitt (18) verbunden ist, wobei die zweite Plattenlänge (13) mit der dritten Plattenlänge (14) durch einen kleineren Beschlag-Schleifen-Abschnitt (19) mit reduzierter Breite verbunden ist, wobei die S-förmige Platte (1) eine erste Schließposition für erweiterte Durchmesser aufweist, bei welcher die erste Plattenlänge (12) zwischen dem ersten (7) und dem zweiten (9) Endabschnitt des Rings (2) angeordnet ist, und eine zweite Schließposition für reduzierte Durchmesser aufweist, die im Hinblick auf die erste Position nach oben gewandt ist, und bei welcher die erste Plattenlänge (12) außerhalb des ersten und zweiten Abschnitts (7,9) angeordnet ist.

2. Schließvorrichtung nach Anspruch 1, **dadurch gekennzeichnet, dass** der Ring (2) von zwei halbrunden Ringabschnitten gebildet ist, einem ersten (4) und einem zweiten (5), wobei der erste (4) Ringabschnitt den ersten Endabschnitt (7) umfasst, wobei der erste Endabschnitt (7) ein Durchgangsloch (8) umfasst, wobei der zweite (5) Ringabschnitt den zweiten Endabschnitt (9) umfasst, wobei der zweite Endabschnitt (9) einen sich radial erstreckenden Schlitz (10) umfasst, der an der äußeren Kante geöffnet ist.

3. Schließvorrichtung nach Anspruch 2, **dadurch gekennzeichnet, dass** die Ringabschnitte (4,5) ein Endteil davon aufweisen, welches angepasst ist, mit dem Endabschnitt des jeweils anderen Teils in Eingriff zu gelangen bzw. zu sein, um ein Gelenk (6) zu bilden.

4. Schließvorrichtung nach Anspruch 2, **dadurch gekennzeichnet, dass** der Schlitz (10) des zweiten Endabschnitts (9) des Rings eine Breite aufweist, die ausgelegt ist, es einem Schaft des Verschluss-Schraubelements (20) zu ermöglichen, dort hindurch zu gelangen, jedoch schmaler ist, als jene eines Kopfes des Verschluss-Schraubelements (20).

5. Schließvorrichtung nach einem der vorhergehenden Ansprüche, **dadurch gekennzeichnet, dass** der Ring (2) eine Gummi-Ummantelung (11) umfasst, die im Einsatz zwischen einer äußeren Oberfläche des Rohrs (3) und der inneren Oberfläche des Rings (2) angeordnet ist.

## Revendications

1. Dispositif de blocage (1) permettant de bloquer des colliers ou des bandes de serrage de tube (2), comprenant un élément de vis de blocage (20) apte à être appliqué sur une première portion d'extrémité libre (7) d'un collier de serrage (2) ou similaire, au niveau de deux positions différentes, l'une pour un diamètre d'application élargi et l'autre pour un diamètre d'application réduit, ledit élément de vis de blocage (20) étant câble de basculer sur la première portion d'extrémité libre (7) grâce à quoi il peut être enclenché sur la seconde portion d'extrémité libre (9) dudit collier, pour bloquer ledit collier (2) sur un tube (3), **caractérisé en ce que** ledit dispositif de blocage comprend une plaque en forme de S (1) ayant une première longueur de plaque (12) munie d'un trou traversant (15), une seconde longueur de plaque (13) munie d'un trou fileté (16) et une troisième longueur de plaque (14) munie d'un trou fileté (17), la première longueur de plaque (12) étant couplée à la seconde longueur de plaque (13) par une portion de boucle à ajustement large (18), la seconde longueur de plaque (13) étant couplée à la troisième longueur de plaque (14) par une portion de boucle à ajustement de largeur réduite (19), la plaque en forme de S (1) ayant une première position de blocage pour des diamètres agrandis avec la première longueur de plaque (12) située entre la première (7) et la seconde (9) portions d'extrémité du collier (2), et une seconde position de blocage pour des diamètres réduits, tournés vers le haut par rapport à la première position, la première longueur de plaque (12) étant située vers l'extérieur desdites première et seconde portions (7, 9).

2. Dispositif de blocage selon la revendication 1, **caractérisé en ce que** ledit collier (2) est constitué de deux portions de collier semi-circulaires, une première (4) et une seconde (5), la première portion de collier (4) comprenant ladite première portion d'extrémité (7), la première portion d'extrémité (7) incluant un trou traversant (8), la seconde portion de collier (5) comprenant ladite seconde portion d'extrémité (9), la seconde portion d'extrémité (9) incluant une fente s'étendant radialement (10) ouverte au niveau du bord extérieur.

3. Dispositif de blocage selon la revendication 2, **caractérisé en ce que** lesdites parties de collier (4, 5) ont une partie d'extrémité conçue pour s'engager sur la partie d'extrémité de l'autre partie respective afin de former une charnière (6).

4. Dispositif de blocage selon la revendication 2, **caractérisé en ce que** ladite fente (10) de la seconde partie d'extrémité (9) du collier a une largeur conçue pour permettre à une tige de l'élément de vis de blocage (20) de le traverser mais plus étroite que celle d'une tête dudit élément de vis de blocage (20).

5. Dispositif de blocage selon l'une quelconque des revendications précédentes, **caractérisé en ce que** ledit collier (2) comprend une gaine en caoutchouc (11) agencée, pendant l'utilisation, entre une surface externe du tube (3) et la surface interne du collier (2).
